# EUROPEAN PATENT APPLICATION

(11) **EP 1 228 967 A1**
(43) Date of publication of application: **07.08.2002**
(21) Application number: 01830060.8
(22) Date of filing: 31.01.2001
(51) Int. Cl.: B65B 61/18, B65B 57/02, B21D 51/42, B31B 1/84

(54) **Unit for applying opening devices to packages of pourable food products**

(71) Applicant: Tetra Laval Holdings & Finance S.A., 1009 Pully (CH)
(72) Inventor: Raimondi, Federico, 41100 Modena (IT); Desogus, Michele, 41100 Modena (IT); Hansson, Gert, 41100 Modeno (IT)
(74) Representative: Cerbaro, Elena, Dr.

(57) **Abstract**

A unit (1) for heat sealing opening devices (2) to sealed packages (3) of pourable food products, the unit (1) having conveying means (7) for feeding the packages (3) successively along a first path (P); supply means (35) for feeding the opening devices (2) along a second path (Q) to an application station (11) for applying the opening devices (2) to respective packages (3); heating means (40, 41) for heating the opening devices (2) prior to application to the packages (3); and selectively activated heat dispersing means (52) for dispersing the heat produced by the heating means (40, 41) in the absence of opening devices (2) at the heating means (40, 41).

## Description

The present invention relates to a unit for applying opening devices to packages of pourable food products.

As is known, many pourable food products, such as fruit juice, UHT (ultra-high-temperature processed) milk, wine, tomato sauce, etc., are sold in packages made of sterilized packaging material.

A typical example of such a package is the parallelepiped-shaped package for liquid or pourable food products known as Tetra Brik Aseptic (registered trademark), which is formed by folding and sealing laminated strip packaging material. The packaging material has a multilayer structure comprising a layer of fibrous material, e.g. paper, covered on both sides with layers of heat-seal plastic material, e.g. polyethylene, and, in the case of aseptic packages for long-storage products, such as UHT milk, also comprises a layer of oxygen-barrier material defined, for example, by an aluminium film, which is superimposed on a layer of heat-seal plastic material and is in turn covered with another layer of heat-seal plastic material eventually defining the inner face of the package contacting the food product.

As is known, such packages are made on fully automatic packaging machines, on which a continuous tube is formed from the web-fed packaging material; the web of packaging material is sterilized on the packaging machine itself, e.g. by applying a chemical sterilizing agent, such as a hydrogen peroxide solution, which, after sterilization, is removed, e.g. vaporized by heating, from the surfaces of the packaging material; and the web of packaging material so sterilized is maintained in a closed sterile environment, and is folded and sealed longitudinally to form a vertical tube.

The tube is filled with the sterilized or sterile-processed food product, and is sealed and cut at equally spaced cross sections to form pillow packs, which are then folded mechanically to form the finished, e.g. substantially parallelepiped-shaped, packages.

Alternatively, the packaging material may be cut into blanks, which are formed into packages on forming spindles, and the resulting packages are filled with the food product and sealed. One example of such a package is the so-called "gable-top" package commonly known by the trade name Tetra Rex (registered trademark).

Once formed, packages of the above type may be undergo further operations, such as the application of a closable opening device.

The most commonly used opening devices comprise a frame defining an opening and fitted about a pierceable or removable portion of the top wall of the package; and a cap hinged or screwed to the frame and which can be removed to open the package. Other, e.g. slidable, opening devices are also known to be used.

The pierceable portion of the package may be defined, for example, by a so-called "prelaminated" hole, i.e. a hole formed in the fibrous layer of the packaging material before the fibrous layer is joined to the barrier layer, which is thus whole and closes the hole to ensure hermetic, aseptic sealing, while at the same time being easily pierced.

In the case of aseptic packaging machines, the opening devices described are normally heat sealed continuously straight onto the packages on on-line application units downstream from the packaging machine.

Known application units substantially comprise a chain conveyor for feeding the packages successively along a normally straight path; a feed conveyor for feeding the opening devices successively to a heat-seal station; first heating means for locally heating the packages at the pierceable portions; second heating means for heating the opening devices; and selectively activated application means for pressing the opening devices onto the respective packages.

For the opening devices to adhere correctly to the packages, the outer thermoplastic layer of the packages must be softened locally and the thermoplastic material of the opening devices melted; and, being much thicker than the outermost layer of the packages, the opening devices must be heated locally at very high temperature.

Consequently, in the event of one or more missing opening devices on the conveyor, e.g. due to an interruption in supply of the devices onto the conveyor, the heat produced by the second heating means and not absorbed by the missing opening device may result in severe stress on, and possible damage of, the conveyor.

It is an object of the present invention to provide a unit for applying opening devices to packages of pourable food products, designed to eliminate the aforementioned drawback typically associated with known application units.

According to the present invention, there is provided a unit for heat sealing opening devices to sealed packages of pourable food products, said unit comprising conveying means for feeding said packages successively along a first path; supply means for feeding said opening devices along a second path to an application station for applying the opening devices to respective said packages; heating means for heating said opening devices prior to application to said packages; and selectively activated heat dispersing means for dispersing the heat produced by said heating means in the absence of said opening devices at said heating means.

A preferred, non-limiting embodiment of the present invention will be described by way of example with reference to the accompanying drawings, in which:
Figure 1 shows a schematic plan view of a unit in accordance with the present invention for applying opening devices to packages of pourable food products;
Figure 2 shows a larger-scale partial view in perspective of a detail of the Figure 1 unit;
Figure 3 shows a schematic plan view of a heat dispersing device forming part of the Figure 1 unit;
Figures 4 and 5 show larger-scale side views of two different details of the Figure 3 heat dispersing device.

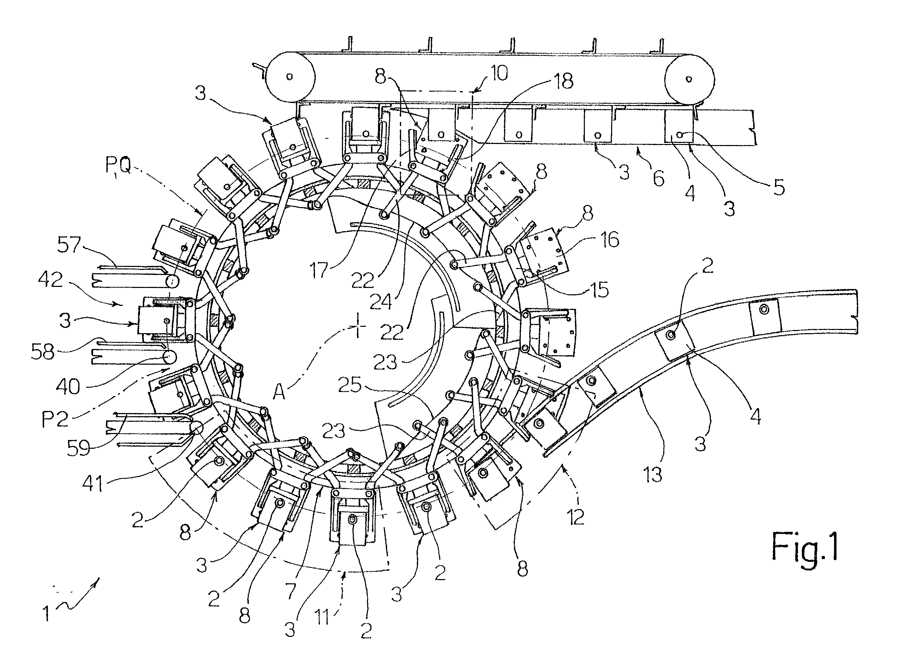

Number 1 in Figure 1 indicates as a whole a unit for applying opening devices 2 to aseptic packages 3 of pourable food products.

Packages 3 are made on a packaging unit (not shown) from a web of sheet packaging material comprising a layer of fibrous material covered on both sides with layers of heat-seal plastic material, e.g. polyethylene; and a layer of barrier material, e.g. aluminium, located on the inside of the fibrous material layer and in turn covered on the inside with another layer of heat-seal plastic material.

A top face 4 of each of packages 3, which, in the example shown are substantially parallelepiped-shaped, has a pierceable portion 5 conveniently defined by a so-called "prelaminated" hole, i.e. a hole formed in the fibrous layer of the packaging material before the fibrous layer is joined to the barrier layer, which thus closes the hole to ensure hermetic, aseptic sealing, while at the same time being easily pierced.

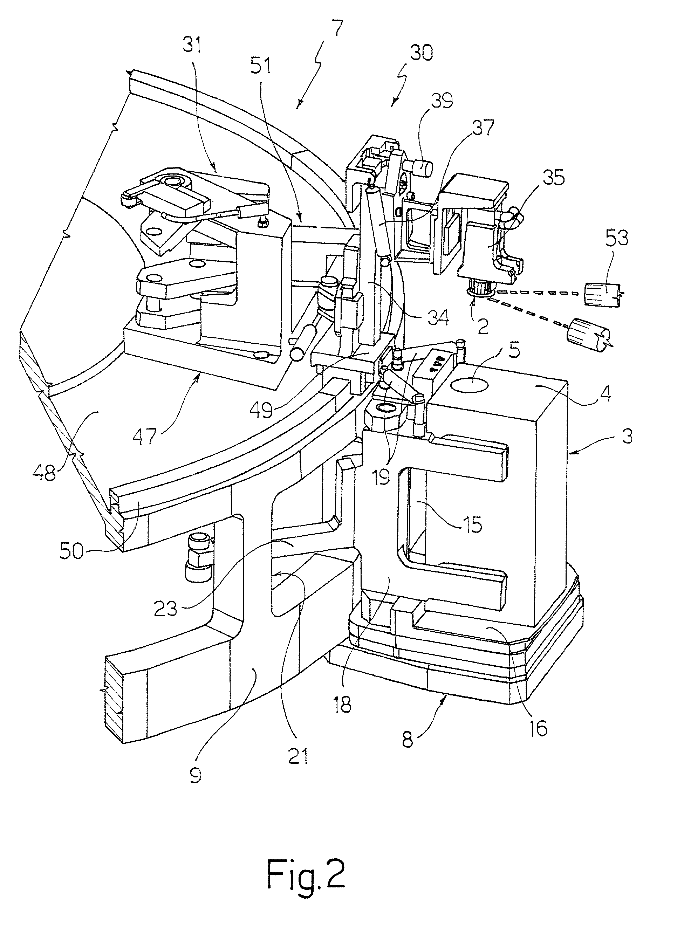

Unit 1 comprises a rotary table 7, of axis A, rotated about its axis at constant speed by conventional drive means (not shown). Rotary table 7 supports a number of seating devices 8 for housing packages 3, and which are fixed in equally spaced manner to, and project radially from, a substantially cylindrical peripheral lateral wall 9 of rotary table 7 (Figure 2).

Devices 8 receive respective packages 3 from a known input conveyor 6 tangent to rotary table 7 at a supply station 10 and for conveying packages 3 in equally spaced manner and at a constant speed equal to the linear speed of devices 8.

Rotating together with rotary table 7, devices 8 feed packages 3 along a circular path P through an application station 11 for applying opening devices 2 and up to an unloading station 12 where packages 3 are removed by an output conveyor 13.

More specifically, each device 8 (Figures 1 and 2) comprises a vertical wall or back 15 fixed to lateral wall 9 of rotary table 7; a base 16 on which a respective package 3 rests; and two lateral retaining members 17, 18 hinged to the sides of vertical wall 15 and loaded by respective springs 19 so as to cooperate with respective lateral faces of package 3 and keep the package steady on base 16 throughout the time it remains on rotary table 7.

Members 17 and 18, which are located down- and upstream respectively of respective package 3 along path P, have respective control arms 22, 23 extending inwards of rotary table 7 through openings 21 in lateral wall 9, and which interact with respective fixed cams 24, 25 close to stations 10, 12 respectively (Figure 1).

Cam 24 acts on arms 22 to produce a rotary opening movement of members 17, i.e. away from the corresponding members 18, and so permit insertion of packages 3 inside respective devices 8 without interfering with members 17. Similarly, cam 25 acts on arms 23 to produce a rotary opening movement of members 18 at unloading station 12 and so permit withdrawal of packages 3 without interfering with members 18 (Figure 1).

Unit 1 also comprises a number of application devices 30 (Figure 2) carried by rotary table 7, associated with respective seating devices 8, and movable along a circular path Q superimposed on path P of devices 8. In the example shown, application devices 30 are secured to rotary table 7 by respective variable-speed drive assemblies 31 not described in detail by not forming part of the present invention.

Each application device 30 comprises a vertical guide 34 secured to rotary table 7 by respective assembly 31; and a work head 35 having jaws (not shown) for gripping an opening device 2, and movable along guide 34 between a raised rest position (Figure 2) and a lowered work position in which opening device 2 is pressed onto package 3 at prelaminated hole 5. Work head 35 is maintained in the rest position by springs 37; and the movement of work head 35 is controlled by a fixed cam (not shown) extending along path P at application station 11 and over rotary table 7, and which cooperates with a cam follower 39 fixed to work head 35.

By means of a conventional device not shown, opening devices 2 are conveniently supplied successively to unit 1 at supply station 10, where they are picked up by the jaws of each application device 30.

Opening devices 2 are conveniently applied by heat sealing; for which purpose, prior to application of respective opening devices 2, packages 3 are heated by means of a hot-air header (not shown) located over the path of the packages, along a portion P2 of path P immediately upstream from application station 11.

Opening devices 2, on the other hand, must be heated locally at a much higher temperature.

This is done using two preheat blowers 40 emitting respective hot-air jets; and a hydrogen burner 41 generating a microflame for locally melting the thermoplastic material of opening device 2. As shown schematically in Figure 1, blowers 40 and burner 41 are located along portion P2 of path P, just beneath path Q of work heads 35 of application devices 30, and together define a heating station 42.

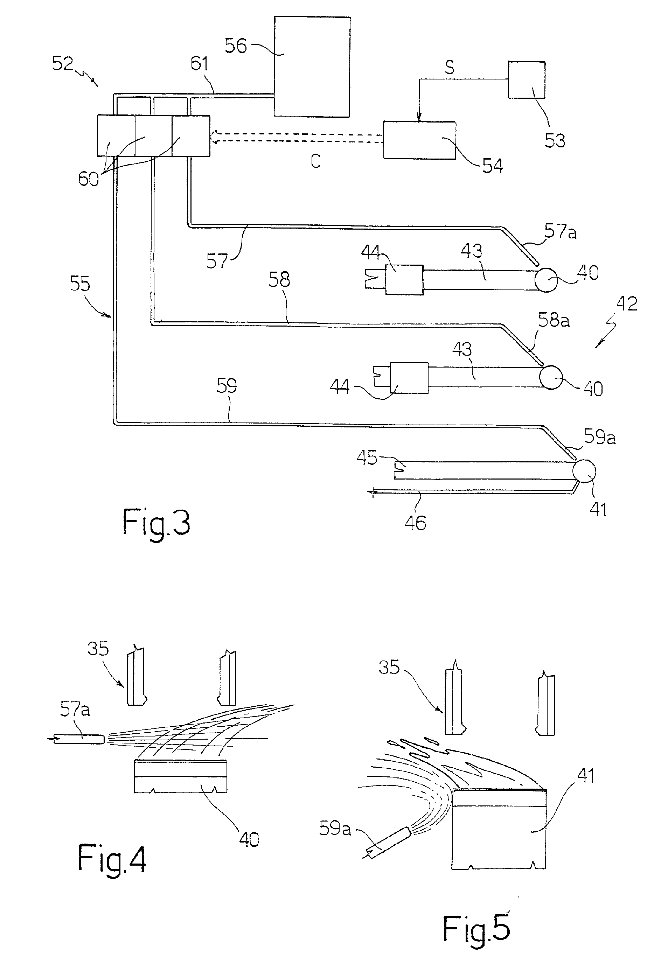

More specifically, as shown in Figure 3, air is supplied to blowers 40 along respective headers 43 and heated by relative electric resistors 44 in series with headers 43. And similarly, burner 41 is supplied with air and hydrogen along respective conduits 45, 46.

In actual use, rotary table 7 preferably rotates at constant speed, and variable-speed drive assemblies 31 provide for step-feeding application devices 30 at station 10 to feed opening devices 2 into respective work heads 35, and at station 42 to maximize the heating time of opening devices 2. Along the rest of path P, application devices 30 rotate integrally with rotary table 7.

Each drive assembly 31 substantially comprises an anchoring member 47 fixed to a top wall 48 of rotary table 7, close to a respective device 8; a slide 49 connected rigidly to respective application device 30 and fitted to slide along a circumferential guide 50 integral with rotary table 7; and a mechanism 51 interposed between anchoring member 47 and slide 49.

With particular reference to Figure 3, unit 1 also comprises a heat dispersing device indicated as a whole by 52 and which provides for dispersing the heat generated by blowers 40 and burner 41 in the absence of respective opening devices 2 on work heads 35 of application devices 30 at station 42.

Unit 1 also comprises a known optical sensor 53 located along path Q, immediately upstream from station 42, and generating an absence signal S in the absence of opening device 2 on the work head 35 moving past sensor 53; and an electronic control unit 54, which receives absence signal S and generates a control signal C to control heat dispersing device 52.

In a preferred embodiment of the present invention, heat dispersing device 52 comprises a compressed air supply circuit 55 selectively activated by control unit 54, in response to absence signal S, to direct cold-air jets into the station 42 region to divert the hot-air jets from blowers 40 and the microflame from burner 41.

More specifically, circuit 55 comprises a compressed-air tank 56; and three supply conduits 57, 58, 59 connected to tank 56 via respective solenoid valves 60, and having, at the opposite ends, respective open end portions defining respective air jet outlets 57a, 58a, 59a and bent towards blowers 40 and burner 41 respectively. More specifically, conduits 57, 58, 59 branch off from a header 61 connected at the inlet to tank 56.

Each solenoid valve 60 is normally closed and is opened by control unit 54 in response to absence signal S.

With particular reference to Figures 1 and 3, outlets 57a, 58a, 59a of conduits 57, 58, 59 are straight and extend on one side of blowers 40 and burner 41 respectively.

More specifically, outlets 57a, 58a of conduits 57, 58 are located slightly higher than the bodies of respective blowers 40, and extend crosswise to paths P, Q and perpendicularly to axis A so as to direct the respective cold-air jets over blowers 40 and conveniently divert the hot air from the blowers towards axis A of rotary table 7 and from one side of blowers 40 (Figure 4). More specifically, the air jets from conduits 57, 58 are directed transversely onto the hot-air jets generated by respective blowers 40 so as to divert the hot-air jets away from the heating region of opening devices 2.

A different operating mode must be adopted for the air jet from conduit 59 to avoid extinguishing the microflame of burner 41. In this case, therefore, outlet 59a of conduit 59 is located below the top edge of burner 41 and extends obliquely with respect to burner 41 so as to direct the cold-air jet onto the body of burner 41 and generate a lateral vortex to lower and draw the microflame to one side (Figure 5). In other words, the vortex generated by the cold-air jet "sucks" the microflame away from the burner 41 area.

Operation of unit 1, which is partly self-explanatory from the foregoing description, is as follows.

Before each device 8 reaches supply station 10, control arm 22 of lateral retaining member 17 of seating device 8 reaches cam 24 and opens member 17.

At station 10, a package 3 is fed into seating device 8 and the respective opening device 2 is fed onto work head 35 of application device 30.

At the output of station 10, arm 22 abandons cam 24 so that lateral member 17 of seating device 8 closes to retain package 3 firmly inside device 8.

Device 30 then rotates integrally with rotary table 7 and respective seating device 8 about axis A up to portion P2 of path P where the package heating header and opening device 2 heating station are located. Along portion P2 of path P, the packages 3 in transit are heated by the header to soften the outer polyethylene layer of the packaging material; and devices 30 are fed successively past each blower 40 and burner 41 so that opening devices 2 are first preheated and then melted locally by the microflame of burner 41.

Immediately downstream from portion P2 of path P, seating devices 8 and application devices 30 enter application station 11, where work heads 35 are pushed down by respective cam followers 39 engaging the fixed control cam, so as to keep opening devices 2 in contact with respective packages 3 until sealing is completed.

Packages 3 complete with opening devices 2 are removed by output conveyor 13 at unloading station 12.

In the event optical sensor 53 detects the absence of opening device 2 on work head 35 of the application device 30 moving past sensor 53, heat dispersing device 52 is activated immediately. More specifically, sensor 53 transmits absence signal S to control unit 54, which, in response, opens solenoid valves 60.

The compressed air in tank 56 thus flows along header 61 and conduits 57, 58, 59 and out through respective outlets 57a, 58a, 59a at blowers 40 and burner 41.

The cold-air jets from conduits 57, 58 are directed over respective blowers 40 to divert the hot-air jets from blowers 40 towards the center of unit 1, so as not to interfere with the adjacent application devices 30. The cold-air jet from conduit 59, on the other hand, is directed onto and diverted by the body of burner 41 so as to generate a vortex to lower and draw the microflame to one side and away from the burner 41 area.

The advantages of unit 1 according to the present invention will be clear from the foregoing description.

In particular, the cold-air jets from conduits 57, 58, 59 provide for diverting the hot-air jets from blowers 40 and the microflame of burner 41 away from the area in which they might possibly interact with work heads 35 of application devices 30, thus preventing possible damage to any work heads 35 without respective opening devices 2.

Clearly, changes may be made to unit 1 as described herein without, however, departing from the scope of the accompanying Claims.

In particular, the paths of packages 3 and opening devices 2 may be straight; and rotary table 7 and application devices 30 may both be fed in steps along the respective paths.

## Claims

1. A unit (1) for heat sealing opening devices (2) to sealed packages (3) of pourable food products, said unit (1) comprising conveying means (7) for feeding said packages (3) successively along a first path (P); supply means (35) for feeding said opening devices (2) along a second path (Q) to an application station (11) for applying the opening devices (2) to respective said packages (3); heating means (40, 41) for heating said opening devices (2) prior to application to said packages (3); and selectively activated heat dispersing means (52) for dispersing the heat produced by said heating means (40, 41) in the absence of said opening devices (2) at said heating means (40, 41).

2. A unit as claimed in Claim 1, **characterized by** comprising detecting means (53) located along said second path (Q) and upstream from said heating means (40, 41), and which generate an absence signal (S) in the event said supply means (35) moving past the detecting means (53) have no said opening devices (2); and activating means (54) for activating said heat dispersing means (52) in response to said absence signal (S).

3. A unit as claimed in Claim 1 or 2, **characterized in that** said heat dispersing means (52) comprise air jet supply means (55, 56, 60) for supplying air jets to the region of said heating means (40, 41).

4. A unit as claimed in Claim 3, **characterized in that** said heating means comprise at least one blower (40) for directing a stream of hot air onto the relative said opening device (2); and **in that** said air jet supply means (55, 56, 60) comprise a first outlet (57a, 58a) located close to said blower (40) and generating an air jet which strikes the stream of hot air from the blower (40) transversely to divert it away from the heating region of said opening devices (2).

5. A unit as claimed in Claim 4, **characterized in that** the air jet from said first outlet (57a, 58a) is directed crosswise to said second path (Q).

6. A unit as claimed in any one of Claims 3 to 5, **characterized in that** said heating means comprise at least one gas burner (41) generating a flame directed onto the relative said opening device (2); and **in that** said air jet supply means (55, 56, 60) comprise a second outlet (59a) located to one side of said burner (41) and generating an air jet which strikes the body of the burner (41) to create a lateral vortex for drawing said flame away from the heating area of said opening devices (2).

7. A unit as claimed in Claim 6, **characterized in that** said air jet supply means comprise a tank (56) of compressed air; an air supply circuit (55) connected to said tank (56) and defining said first and second outlet (57a, 58a; 59a); and ON/OFF valve means (60) in series with said circuit (55).

8. A unit as claimed in Claim 7, **characterized in that** said activating means comprise a control unit (54) receiving said absence signal (S) and generating a control signal (C) for controlling said valve means (60).

9. A unit as claimed in any one of the foregoing Claims, **characterized in that** said first path (P) is a circular path.

10. A unit as claimed in Claim 9, **characterized in that** said second path (Q) is a circular path superimposed on said first path (P).

11. A unit as claimed in any one of the foregoing Claims, **characterized in that** said supply means comprise a number of work heads (35) supporting respective opening devices (2) and traveling successively along said second path (Q).
